Europäisches Patentamt

European Patent Office

Office européen des brevets

(19)

(11) Veröffentlichungsnummer: **0 062 245**
**B1**

# (12) EUROPÄISCHE · PATENTSCHRIFT

(45) Veröffentlichungstag der Patentschrift:
08.08.84

(51) Int. Cl.³: **C 09 D 3/68**, C 09 D 5/02

(21) Anmeldenummer: **82102489.0**

(22) Anmeldetag: **25.03.82**

(54) **Wässrige Dispersion oder Emulsion filmbildender Bindemittel.**

(30) Priorität: **31.03.81 DE 3112694**

(43) Veröffentlichungstag der Anmeldung:
**13.10.82 Patentblatt 82/41**

(45) Bekanntmachung des Hinweises auf die Patenterteilung:
**08.08.84 Patentblatt 84/32**

(84) Benannte Vertragsstaaten:
**AT BE CH DE FR GB IT LI NL SE**

(56) Entgegenhaltungen:
**EP - A - 0 003 337**
**EP - A - 0 014 883**
**EP - A - 0 021 078**

(73) Patentinhaber: **BASF Farben + Fasern
Aktiengesellschaft, Am Neumarkt 30,
D-2000 Hamburg 70 (DE)**

(72) Erfinder: **Schwarz, Günther, Dipl.-Chem. Dr., Zum
Hiltruper See 25, D-4400 Münster (DE)**

(74) Vertreter: **Habbel, Hans-Georg, Dipl.-Ing.,
Postfach 3429 Am Kanonengraben 11, D-4400 Münster
(DE)**

**Beschreibung**

Die Erfindung bezieht sich auf wäßrige Dispersionen oder Emulsionen filmbildender Bindemittel, die gegebenenfalls Weichmacher, Mattierungsmittel, Füllstoffe, Pigmente, Additive und Zusatzmittel enthalten, für schnellhärtende Überzugsmittel.

Wäßrige Emulsionen von ungesättigten Polyesterharzen sind aus der europäischen Patentschrift 3 337 bekannt. Sie enthalten zwei ungesättigte Polyester mit $\beta,\gamma$-ethylenisch ungesättigten Ethergruppen, zusätzlich enthält einer von diesen Polyestern Polyalkylenglykolreste einkondensiert. Diese bekannten Emulsionen sind frei von Monomeren und enthalten als Sperrmittel zum Verhindern der Inhibierung der Polymerisation durch den Sauerstoff der Luft Wachse oder Paraffine. Diese bekannten Emulsionen lassen sich im Gemisch mit Fotoinitiatoren mit Hilfe von UV-Strahlen härten oder im Gemisch mit Peroxiden bei Raumtemperatur polymerisieren. Sie werden vorgeschlagen für die offenporige Beschichtung auf Holz oder holzähnlichen Stoffen.

Diese bekannten Polyesteremulsionen haben den Nachteil, daß sie eine relativ lange Trockenzeit benötigen und bei Anwendung höherer Temperaturen eine Zwischentrocknung über eine Abdunstzone zur Entfernung des Wassers erforderlich ist, weil der Film sonst durch Wassereinschlüsse milchig trüb wird. Für die kontinuierliche Arbeitsweise, wo es auf sehr kurze Härtungszeiten ankommt, reicht die Härtungszeit bis zur Stapelfähigkeit bzw. Aufwickelbarkeit nicht aus.

Aufgabe der vorliegenden Erfindung ist es deshalb, wäßrige Dispersionen oder Emulsionen dieser Art für schnellhärtende Überzugsmittel zu schaffen, die die bekannten Nachteile nicht aufweisen.

Diese Aufgabe wurde überraschenderweise gelöst durch wäßrige Dispersionen oder Emulsionen filmbildender Bindemittel für schnellhärtende Überzugsmittel, die dadurch gekennzeichnet sind, daß sie mindestens ein Acrylatpolymerisat mit einer Filmbildungstemperatur von über 60°C und mindestens ein ungesättigtes Polyesterharz enthalten.

Besonders gute Ergebnisse werden erreicht, und deshalb bevorzugt sind solche wäßrigen Dispersionen oder Emulsionen, in denen auf 30 bis 70 Gew.-% Acrylatpolymerisat 70 bis 30 Gew.-% ungesättigtes Polyesterharz kommen, wobei die Summe von Acrylatpolymerisat und ungesättigtem Polyesterharz 100 Gew.-% beträgt.

Ein weiterer Gegenstand der Erfindung ist die Verwendung der wäßrigen Dispersion oder Emulsion für die Herstellung von schnellhärtenden Überzügen auf Oberflächen aus Holz, Holzwerkstoffen, Papier, Vlies, gehärteten oder ungehärteten, mit Tränkharzen imprägnierten, gewebten oder ungewebten Trägermaterialien, Kunststoff-Folien, Asbestzementplatten, Mineralfaserplatten sowie Metallen, wie z. B. Aluminium.

Gegenstand der Erfindung ist auch ein Verfahren zur Herstellung eines schnellhärtenden Überzuges auf einem Substrat, das sich dadurch auszeichnet, daß man die erfindungsgemäße wäßrige Dispersion oder Emulsion mit einem wasserlöslichen Peroxidhärter vermischt und nach dem Aufbringen auf das Substrat den Überzug innerhalb weniger Sekunden bei einer Temperatur von über 80°C, vorzugsweise über 100°C, klebfrei und stapelfähig härtet.

Die erfindungsgemäßen Dispersionen oder Emulsionen enthalten kein organisches Lösungsmittel und sind mit Wasser verdünnbar. Sie sind ferner frei von Monomeren, die mit den ungesättigten Polyestern copolymerisierbar wären.

Die erfindungsgemäßen Dispersionen oder Emulsionen sind praktisch geruchsfrei, sie eignen sich für schnellhärtende Überzüge auf vielen Substraten. Die gehärteten Überzüge sind kratzfest und gegen Wasser, Alkohol, Haushaltschemikalien und Lösungsmittel beständig. Da nur Wasser als Verdünnungsmittel dient, sind die Dispersionen oder Emulsionen unbrennbar. Arbeitsgeräte, mit denen diese Materialien in Berührung kommen, können durch Abspülen mit Wasser gereinigt werden. Die Mitverwendung von Vernetzungsmitteln ist entbehrlich.

Für die Härtung werden den erfindungsgemäßen Dispersionen oder Emulsionen Kobaltbeschleuniger oder Peroxidhärter zugesetzt. Bei höheren Temperaturen über 80°C setzt sofort nach kurzer Zeit eine klebfreie Härtung ein. Die sehr schnell einsetzende klebfreie Filmbildung wird unterstützt und stabilisiert durch eine zusätzliche durch chemische Härtung in Gang gesetzte Vernetzung. Natürlich ist es auch möglich, nach Zusatz von Kobaltbeschleuniger und Peroxidhärter den Überzug nur bei Raumtemperatur zu härten. Es entsteht in diesem Falle jedoch nur ein Film mit nicht ausreichenden technologischen Eigenschaften.

Nur solche Acrylatpolymerisate finden in der erfindungsgemäßen Dispersion oder Emulsion Verwendung, deren Filmbildungstemperatur über 60°C beträgt, vorzugsweise soll sie mehr als 100°C betragen. Solche Acrylatpolymerisate sind bekannt und handelsüblich. Unter Acrylatpolymerisaten im Sinne der Erfindung werden Homopolymerisate von Acrylsäurederivaten und/oder Methacrylsäurederivaten oder Copolymerisate dieser Verbindungen mit anderen mischpolymerisierbaren Monomeren verstanden. Bevorzugt geeignet sind Monomere, wie Styrol, Vinyltoluol und Methacrylsäureester niederer aliphatischer Alkohole mit 1 bis 3 C-Atomen. Andere Monomere können in geringen Anteilen bis zu insgesamt 25 Gew.-%, bezogen auf 100% der Gesamtmonomeren, mitverwendet werden. Die Acrylatpolymerisate werden in der Regel nach dem Verfahren der Emulsionspolymerisation hergestellt und liegen dann bereits in Form einer wäßrigen Dispersion vor.

Die in wäßrigen Dispersionen oder Emulsionen einsetzbaren ungesättigten Polyesterharze sind

**0 062 245**

ebenfalls bekannt und handelsüblich. Ihre Säurezahlen betragen zwischen 1 und 50, die OH-Zahlen 10 bis 120 und die mittleren Molekulargewichte liegen zwischen 300 und 5000.

Um besonders gute Resultate zu erhalten, werden vorzugsweise noch solche ungesättigten Polyesterharze mitverwendet, die Polyalkylenglykolreste einkondensiert enthalten. Derartige ungesättigte Polyesterharztypen wirken als Emulgatoren für die Herstellung der ungesättigten Polyesterharzemulsionen. Es handelt sich z. B. um ungesättigte Polyester, wie sie z. B. in der europäischen Patentanmeldung 3 337 beschrieben sind.

Die Herstellung der erfindungsgemäßen Dispersionen oder Emulsionen kann auf einfache Weise durch Mischen der Acrylatpolymerisat-Dispersion mit der ungesättigten Polyester-Emulsion erfolgen. Es ist auch möglich, die wäßrige Acrylatpolymerisat-Dispersion in das Polyestergemisch langsam mit Hilfe eines Rührers oder eines Dissolvers einzurühren.

In vielen Fällen ist es zweckmäßig, den erfindungsgemäßen wäßrigen Dispersionen oder Emulsionen noch Weichmacher, Füllstoffe, Mattierungsmittel, Pigmente, Additive oder Zusatzmittel, wie z. B. Entschäumungsmittel, Verdickungsmittel und Stabilisatoren, sowie Wachs oder Paraffin, ferner auch Acrylatharze mit niedriger Filmbildungstemperatur zuzusetzen. Die Aceton-Beständigkeit des gehärteten Lackfilms läßt sich noch durch einen Zusatz von bis zu 5 Gew.-% eines wasserlöslichen Melamin-Formaldehyd-Harzes oder Harnstoff-Formaldehyd-Harzes, z. B. Hexamethoxymethylmelamin, auf den Festharzanteil bezogen, verstärken.

Die für die Härtung geeigneten wasserlöslichen Peroxidhärter sind z. B. Wasserstoffperoxid, Acetylacetonperoxid, Methylethylketonhydroperoxid, Cyclohexanonperoxid oder wäßrige Emulsionen nicht wasserlöslicher Peroxide. Als Beschleuniger sind geeignet die Schwermetallsalze von Carbonsäuren, wie Kobalt-, Mangan- oder Vanadiumacetat, -naphtenat oder -acetylacetonat. Die Beschleuniger werden in der Regel in Form ihrer wäßrigen Lösungen oder als wäßrige Emulsionen zugesetzt.

Übliche Mengen, die eine ausgezeichnete Härtung gewährleisten, sind 0,5 bis 5 Gew.-% Peroxid und 0,01 bis 0,2 Gew.-% Schwermetallsalz, bezogen auf die Summe der eingesetzten ungesättigten Polyesterharze.

Zum Schutz von lichtempfindlichen Untergründen können den Dispersionen oder Emulsionen geringe Mengen der bekannten UV-Absorber zugesetzt werden, z. B. 2-Hydroxy-4-methoxybenzophenon oder Zimtsäurederivate oder Benzotriazinderivate.

Die erfindungsgemäßen wäßrigen Dispersionen oder Emulsionen können nach den üblichen Auftragsverfahren des Spritzens, Walzens, Gießens auf das Substrat aufgebracht werden in einer Naßfilmschichtdicke bis zu 200 µm, vorzugsweise bis 100 µm. In der Regel sind die Naßfilmschichtdicken geringer. So werden beispielsweise mit Hilfe des Walzauftrages oder des Rakelauftrages auf spaltfestes Papier 8 bis 15 g/m² und auf saugfähiges Papier 15 bis 25 g/m² aufgebracht. Für eine Aluminiumfolie wird in der Regel ein Auftrag von 8 bis 15 g/m² vorgeschlagen.

Ohne Zwischenhärtung oder Vortrocknung erfolgt die Härtung des Überzuges. So wird bereits ein harter Überzug erreicht bei einer Einwirkungsdauer von 10 Sekunden, wenn das beschichtete Substrat einer Düsenluft von 140°C ausgesetzt wird. Mit Hilfe eines Infrarotstrahlers erfolgt die Trocknung bei 140°C Objekttemperatur bereits schon unter 5 Sekunden.

Aufgrund dieser extrem kurzen Trocknungszeiten werden Bandgeschwindigkeiten von ca. 100 m/min erreicht. Dies ermöglicht eine kontinuierliche und rasche Arbeitsweise in Lackieranlagen.

Beispiele

Die in den Beispielen verwendeten Polyester und Acrylatpolymerisate hatten folgende Zusammensetzung:

|  | Polyester (in Molen) | |
|  | A | B |
| --- | --- | --- |
| Maleinsäureanhydrid | 1,0 | 1,0 |
| Propandiol-1,2 | 0,55 |  |
| Polyethylenglykol (MG 400) |  | 0,79 |
| Trimethylolpropandiallylether | 1,0 | 0,4 |
| Säurezahl | 22 | 27 |
| Viskosität (mPa · s), gemessen als 70gew.-%ige Lösung in Styrol bei 20°C | 100 | 560 |

3

Acrylatpolymerisat (in Gewichtsteilen) aus

| | |
|---|---|
| Styrol | 50 |
| Methylmethacrylat | 38 |
| Ethylacrylat | 10 |
| Methacrylsäure | 2 |

Zusammensetzung und Herstellung der erfindungsgemäßen Dispersionen bzw. Emulsionen in Gewichtsteilen

| | Beispiel 1 | 2 | 3 | 4 |
|---|---|---|---|---|
| Polyester A | 25 | 20 | 20 | 20 |
| Polyester B | | 5 | 5 | 5 |
| Acrylatpolymerisat | 20 | 20 | 16 | 20 |
| Hexamethoxymethylmelamin | | | 5 | |
| Entschäumer | 0,5 | 0,5 | 0,5 | 0,5 |
| Paraffin (Fp 57—60° C)-Emulsion in Wasser (10%ig) | 30 | 30 | 30 | 30 |
| Kobaltacetat (1%ige Lösung in Wasser) | 0,5 | 0,5 | 0,5 | 0,5 |
| Wasser | 15 | 15 | 15 | 15 |
| Titandioxid (Rutil) | | | | 7 |
| Bariumsulfat (Blanc fixe) | | | | 8 |

Zur Herstellung der Dispersion bzw. Emulsion wird zunächst in einem Dissolver das Acrylatpolymerisat mit dem Wasser zu einer Dispersion verarbeitet, sofern nicht die Polymerisation bereits schon als Emulsionspolymerisation in dem Wasser ausgeführt wurde.

Die Polyesterharze A und B wurden mittels eines Dissolvers mit der Paraffin-Emulsion in Wasser und der Acrylatpolymerisat-Dispersion verdünnt. Danach wurden die übrigen Stoffe zugemischt.

Die entstandene Emulsion ist stabil. Sie wird mit 0,25 Gewichtsteilen einer 30%igen Wasserstoffperoxidlösung katalysiert. Anschließend werden die gemäß Beispiel 1, 2 und 3 erhaltenen Emulsionen auf spaltfestes Papier aufgewalzt oder aufgerakelt. Die Auftragsmenge beträgt etwa 10 g/m². Die Trocknung erfolgte bei 140° C Objekttemperatur mittels eines Infrarotstrahlers und einer Bestrahlungszeit von 2 Sekunden. Der entstandene Klarlackfilm war stapelfest und ließ sich bei Verwendung einer endlosen Papierbahn als Substratunterlage zu einer Rolle aufrollen, ohne daß die einzelnen Schichten miteinander verklebten.

Beispiel 4 wurde mit einer Naßfilmschichtdicke von 150 µm auf eine Hartfaserplatte aufgebracht und mit einem Düsentrockner bei 140° C 60 Sekunden gehärtet. Der entstandene Film war kratzfest.

**Patentansprüche**

1. Wäßrige Dispersion oder Emulsion filmbildender Bindemittel für schnellhärtende Überzugsmittel mit gegebenenfalls Weichmachern, Mattierungsmitteln, Füllstoffen, Pigmenten, Additiven und Zusatzstoffen, dadurch gekennzeichnet, daß sie mindestens ein Acrylatpolymerisat mit einer Filmbildungstemperatur von über 60° C und mindestens ein ungesättigtes Polyesterharz enthält.

2. Wäßrige Dispersion oder Emulsion nach Anspruch 1, dadurch gekennzeichnet, daß auf 30 bis 70 Gew.-% Acrylatpolymerisat 70 bis 30 Gew.-% ungesättigtes Polyesterharz verwendet werden, wobei die Summe von Acrylatpolymerisat und ungesättigten Polyesterharz 100 Gew.-% beträgt.

3. Wäßrige Dispersion oder Emulsion nach den Ansprüchen 1 oder 2, dadurch gekennzeichnet, daß sie zusätzlich bis zu 5 Gew.-% eines wasserlöslichen Melamin-Formaldehyd-Harzes oder Harnstoff-Formaldehyd-Harzes, auf den Festharzanteil bezogen, enthält.

4. Verwendung der wäßrigen Dispersion oder Emulsion gemäß den Ansprüchen 1 bis 3 für die Herstellung von schnellhärtenden Überzügen auf Oberflächen aus Holz, Holzwerkstoffen, Papier, Vlies, Kunststoff-Folien, Asbestzementplatten, Mineralfaserplatten, sowie Metallen, insbesondere Aluminium, gehärteten oder ungehärteten, mit Tränkharzen imprägnierten, gewebten oder ungewebten Trägermaterialien.

5. Verfahren zum Herstellen eines schnellhärtenden Überzuges auf einem Substrat unter Verwendung der wäßrigen Dispersion oder Emulsion gemäß den Ansprüchen 1 bis 3, dadurch gekennzeichnet, daß man die Dispersion oder Emulsion mit einem wasserlöslichen Kobaltbeschleuniger und einem wasserlöslichen Peroxidhärter vermischt und nach dem Aufbringen auf das Substrat den Überzug bei einer Temperatur von über 80° C zu einem klebfreien und stapelfähigen Film aushärtet.

## Claims

1. Aqueous film-forming binder dispersion or emulsion for use as a rapid-hardening coating, which may contain plasticisers, flatting agents, fillers, pigments, additives and assistants, characterised in that it contains at least one acrylate polymer having a film-forming temperature of above 60° C and at least one unsaturated polyester resin.

2. Aqueous dispersion or emulsion according to Claim 1, characterised in that 70 to 30% by weight of unsaturated polyester resin are used per 30 to 70% by weight of acrylate polymer, the total of acrylate polymer and unsaturated polyester resin being 100% by weight.

3. Aqueous dispersion or emulsion according to Claim 1 or 2, characterised in that it additionally contains up to 5% by weight of a water-soluble melamine-formaldehyde resin or urea-formaldehyde resin, relative to the solid resin content.

4. Use of an aqueous dispersion or emulsion according to Claims 1 to 3, for producing rapid-hardening coatings on surfaces of wood, wood materials, paper, fleeces, plastic sheeting, asbestos cement board, mineral fibre board, metals, in particular aluminum, and cured or uncured, woven or nonwoven substrates impregnated with impregnating resins.

5. Process for producing a rapid-hardening coating on a substrate using an aqueous dispersion or emulsion according to Claims 1 to 3, characterised in that the dispersion or emulsion is mixed with a water-soluble cobalt accelerator and a water-soluble peroxide hardener and, after application to the substrate, the coating is hardened at a temperature of above 80° C to give a nontacky and stackable film.

## Revendications

1. Dispersion ou émulsion aqueuse de liants filmogènes pour produits de revêtement à durcissement rapide avec éventuellement des plastifiants, des agents de matage, des charges, des pigments, des additifs et adjuvants, caractérisée en ce qu'elle contient au moins un polymère d'acrylate ayant une température de formation du film supérieure à 60° C et au moins une résine de polyester insaturé.

2. Dispersion ou émulsion aqueuse selon la revendication 1, caractérisée en ce qu'on utilise pour 30 à 70% en poids du polymère d'acrylate 70 à 30% en poids d'une résine de polyester insaturée, la somme des pourcentages du polymère d'acrylate et de la résine de polyester insaturée étant de 100% en poids.

3. Dispersion ou émulsion aqueuse selon l'une quelconque des revendications 1 ou 2, caractérisée en ce qu'elle contient en outre jusqu'à 5% en poids, sur la base de l'extrait sec de la résine, d'une résine soluble dans l'eau de mélamine-formaldéhyde ou d'une résine d'urée-formaldéhyde.

4. Utilisation de la dispersion ou de l'émulsion aqueuse selon l'une quelconque des revendications 1 à 3 pour la préparation de revêtements à durcissement rapide sur des surfaces en bois, matériaux dérivés du bois, papiers, nappes de carde, feuilles de matière plastique, plaques en amiante-ciment, plaques en fibres minérales, ainsi que métaux, en particulier l'aluminium, ou sur des matériaux de support tissés ou non-tissés, durcis ou non-durcis, imprégnés de résines d'imprégnation.

5. Procédé de préparation d'un revêtement à durcissement rapide sur un support par utilisation de la dispersion ou de l'émulsion aqueuse selon l'une quelconque des revendications 1 à 3, caractérisé en ce que l'on mélange la dispersion ou l'émulsion à un accélérateur au cobalt soluble dans l'eau et à un durcisseur aux peroxydes solubles dans l'eau, et que, après application sur le support, on durcit le revêtement à une température supérieure à 80° C pour créer un film non-poisseux et gerbable.